Europäisches Patentamt

European Patent Office

Office européen des brevets

(19)

(11) Veröffentlichungsnummer: **0 131 823**
**A2**

(12) **EUROPÄISCHE PATENTANMELDUNG**

(21) Anmeldenummer: **84107581.5**

(22) Anmeldetag: **29.06.84**

(51) Int. Cl.⁴: **G 11 B 5/09**

(30) Priorität: 29.06.83 DE 3323335
29.06.83 DE 3323336
05.06.84 DE 3420927

(43) Veröffentlichungstag der Anmeldung:
23.01.85 Patentblatt 85/4

(84) Benannte Vertragsstaaten:
AT BE CH DE FR GB IT LI LU NL SE

(71) Anmelder: Bauer, Norbert, Dr.-Ing.
Volckamerstrasse 14
D-8520 Erlangen(DE)

(72) Erfinder: Bauer, Norbert, Dr.-Ing.
Volckamerstrasse 14
D-8520 Erlangen(DE)

(74) Vertreter: Schiller, Walter, Dr.
Kanzlei Münich & Schiller Willibaldstrasse 36
D-8000 München 21(DE)

(54) Einrichtung zur Aufzeichnung und Rückgewinnung binärer Signale auf einem magnetischen Informationsträger.

(57) Beschrieben wird eine Einrichtung zur Aufzeichnung binärer Signale auf einem magnetischen Informationsträger bei der an einem Aufzeichnungs-Magnetkopf bei jeder Änderung der aufzuzeichnenden Signale von "0" auf "1" ein Nadelimpuls der einen Polarität und bei jeder Änderung von "1" auf "0" ein Nadelimpuls der anderen Polarität angelegt wird.

Die Einrichtung weist entweder zwei Monoflops oder ein Monoflop auf.

Die Ausgangssignale der beiden Monoflops werden über eine Summationsschaltung am Magnetkopf angelegt, während das Ausgangssignal des einen Monoflops über eine Logikschaltung an den Magnetkopf angelegt wird, die die Stromrichtung entsprechend dem anliegenden Datensignal umkehrt.

Weiter wird eine Einrichtung zur Rückgewinnung von auf einem magnetischen Informationsträger aufgezeichnet binären Signalen beschrieben, die den Nulldurchgang des Lesesignals ermittelt. Die Einrichtung weist drei Komparatoren auf, die das Lesesignal mit vorgegebenen Schwellenspannungen vergleichen. Nur wenn die Ausgangssignale der Komparatoren in einer bestimmten Reihenfolge auftreten, wird ein erhaltenes Signal als Lesesignal indentifiziert.

Fig.1

## B e s c h r e i b u n g

Die Erfindung bezieht sich auf eine Einrichtung zur Aufzeichnung binärer Signale auf einem magnetischen Informationsträger gemäß dem Oberbegriff der Patentansprüche 1 bzw. 4 sowie auf eine Einrichtung zur Rückgewinnung der binären Signale aus dem Lesesignal des magnetischen Informationsträgers gemäß dem Oberbegriff des Patentanspruchs 6.

Bei einem bekannten Verfahren zur Aufzeichnung binärer Signale auf einem magnetischen Informationsträger, wie einem Magnetband oder einer Magnetplatte wird das binäre Signal "Eins" (1) durch eine positive Magnetisierung und die binäre "Null" (Ø) durch eine negative Magnetisierung des Informationsträgers dargestellt. Bei "helical-scan"-Recordern mit rotierendem Kopfübertrager muß mit Hilfe einer speziellen Kanalkodierung sichergestellt werden, daß das binäre Signal gleichstromfrei ist. Wird nun mit hoher Flußwechseldichte aufgezeichnet, kann das Lesesignal nicht direkt zur Rückgewinnung des binären Signals benutzt werden. Das Lesesignal wird dann üblicherweise nach einer Entzerrung zunächst differenziert, um die dabei entstehenden Nulldurchgänge auszuwerten. Das Differenzieren vermindert jedoch den Signal/ Störabstand (S/N-Verhältnis).

Deshalb ist in der nicht vorveröffentlichten deutschen Patentanmeldung P 31 50 417.5 ein Verfahren zur Aufzeichnung binärer Signale auf einem magnetischen Informationsträger beschrieben, das eine Aufzeichnung auch bei hoher Flußwechseldichte ohne Gleichstromanteil erlaubt.

Bei dem in dieser Patentanmeldung beschriebenen Verfahren wird lediglich die Änderung des Signals von "1" auf "Ø" bzw.

von "0" auf "1" bei aufeinanderfolgenden binären Signalen in Form entsprechend gerichteter positiver bzw. negativer Nadelimpulse aufgezeichnet. Dabei werden die Spurelemente des magnetischen Informationsträgers zwischen zwei aufeinanderfolgenden Nadelimpulsen nicht magnetisiert. Die Dauer der Nadelimpulse wird so kurz gewählt, daß gerade noch auf dem Aufzeichnungsträger, beispielsweise einem Magnetband oder einer Magnetplatte eine Magnetisierung der magnetischen Teilchen erfolgt. Die Dauer der Schreibimpulse kann damit so kurz sein, daß die Relativgeschwindigkeit zwischen Magnetkopf und Informationsträger keinen merklichen Einfluß auf die Form der aufgebrachten Magnetisierung hat, und daß die Magnetisierung jeweils senkrecht zur Laufrichtung des Informationsträgers erzeugt wird. Hierdurch ist die Form des Schreibimpulses ohne Einfluß auf die resultierende Magnetisierung, wodurch die praktische Realisierung sehr erleichtert wird.

In der ebenfalls nicht vorveröffentlichten deutschen Patentanmeldung P 31 50 418.3 ist ein Verfahren zur Rückgewinnung der binären Signale aus dem Lesesignal von magnetischen Informationsträgern angegeben, die nach dem vorstehend erläuterten Verfahren beschrieben worden sind. Als Lesesignal entsteht ein symmetrisches Signal mit einem Nulldurchgang an der Stelle des Schreibimpulses. Dieser Nulldurchgang kann bei der Signal-Rückgewinnung direkt und ohne zusätzliches Differenzieren ausgewertet werden.

Die in den beiden vorstehend genannten Patentanmeldungen P 31 50 417.5 und P 31 50 418.3 angegebenen Schaltungen zum Aufzeichnen und zum Rückgewinnen der binären Signale sind für äußerst hohe Datenraten in der Größenordnung 40 MBit/sec ausgelegt und damit vergleichsweise kompliziert aufgebaut. Für niedrige Impulsfolgefrequenzen von beispielsweise 19,2 kBaud, wie sie beispielsweise für RS232C-Schnittstellen benötigt werden, sind die in den genannten Patentanmeldungen vorgeschlagenen Schaltungen zu kompliziert und aufwendig.

Der Erfindung liegt die Aufgabe zugrunde, einfache und funktionssichere Einrichtungen zur Aufzeichnung und Rückgewinnung binärer Signale auf einem magnetischen Informationsträger anzugeben, bei denen ein Nadelimpuls positiver Polarität bei jeder Änderung des aufzuzeichenden Signales von "∅" auf "1" und ein Nadelimpuls negativer Polarität bei jeder Änderung des aufzuzeichnenden Signals "1" auf "∅" auf dem Informationsträger aufgezeichnet bzw. gelesen werden soll.

Diese Aufgabe wird erfindungsgemäß für die Aufzeichnung binärer Signale durch die in den kennzeichnenden Teilen der Patentansprüche 1 und 4 und für die Rückgewinnung durch die im kennzeichnenden Teil des Patentanspruchs 6 angegebenen Merkmale gelöst.

Sämtliche erfindungsgemäßen Einrichtungen zur Aufzeichnung binärer Signale haben den Vorteil, daß eine sehr hohe Aufzeichnungsdichte von beispielsweise 2000 Bit/mm der Magnetspur bei Impulsfolgefrequenzen von 19,2 kBaud und darüber möglich ist.

Bei der Einrichtung gemäß Patentanspruch 1 werden die aufzuzeichnenden Daten an die Triggereingänge zweier Monoflops angelegt, von denen das eine Monoflop bei einer ansteigenden Flanke der aufzuzeichnenden Datenimpulse einen Impuls der Dauer $t_i$ und das andere Monoflop einen gleichlangen Impuls bei einer abfallenden Flanke der aufzuzeichnenden Datenimpulse erzeugt. Die Ausgangssignale der beiden Monoflops werden aufsummiert. Gemäs Anspruch 2 wird das aufsummierte Signal, das Impulse unterschiedlicher Polarität enthält, von einer Differenzierschaltung differenziert. Das Ausgangssignal der Differenzierschaltung wird an den Magnetkopf angelegt, so daß durch den Magnetkopf gleichartige Stromimpulse fließen. Die Impulsdauer $t_i$ der beiden Monoflops ist abhängig von den Eigenschaften des magnetischen Trägermaterials und des Magnetkopfs; sie kann beispielsweise meßtechnisch ermittelt und entsprechend eingestellt werden.

Die in Anspruch 2 bzw. 3 angegebenen Weiterbildungen haben den Vorteil, daß der Magnetkopf niederohmig stromausgesteuert wird. Damit spielen die Eigenschaften der Zuleitung eine untergeordnete Rolle, so daß sehr kurze Stromimpulse im Magnetkopf erreicht werden können.

Bei der Einrichtung gemäß Anspruch 4 wird die Dauer sowohl des negativen als auch des positiven Aufzeichnungsimpulses durch ein einziges Monoflop bestimmt. Die Forderung nach exakt gleichlangen Impulsen der Dauer $t_i$ ist damit unabhängig von Bauteiletoleranzen gewährleistet. Darüberhinaus sind die am Magnetkopf anliegenden Spannungsimpulse $+U_v$ und $-U_v$ in ihrem Absolutwert exakt gleich groß, da die Impulse aus derselben Betriebsspannung $U_v$ abgeleitet werden.

Bei der Einrichtung zur Rückgewinnung binärer Signale gemäß Anspruch 6 wird die Lesespannung von drei Komparatoren mit einer positiven und einer gleich großen negativen Spannung sowie mit einer zwischen diesen liegenden Nullspannung verglichen. Drei nachgeschaltete Monoflops geben jeweils beim Überschreiten einer positiven Schwellenspannung von der positiven Seite des Lesesignals her, beim Überschreiten einer negativen Schwellenspannung von der negativen Seite des Lesesignals her sowie zum Zeitpunkt eines festgestellten Nulldurchgangs einen Impuls bestimmter Länge ab. Diese Impulse werden über UND-Glieder mit negiertem Ausgang an den S- und den R-Eingangsanschluß eines Flipflops angelegt.

Hierdurch kann bei der Rückgewinnung der binären Signale aus dem Lesesignal des magnetischen Aufzeichungsträgers zwischen gültigen Nulldurchgängen und solchen, die durch Rauschen und Störungen verursacht sind, unterschieden werden, so daß bei vergleichsweise kleinem Schaltungsaufwand eine funktionssichere Rückgewinnung des Datensignals möglich ist.

Bei einer Weiterbildung dieser Einrichtung gemäß Anspruch 7 ist eine Schaltung zur Speicherung des Spitzenwerts der maximalen Lesespannung in positiver und in negativer Richtung vorgesehen, und die positive Schwellenspannung auf 20% des positiven und die negative Schwellenspannung auf 20% des negativen Spitzenwertes der Lesespannung eingestellt.

Gemäß Anspruch 8 ist die Dauer der Impulse der Monoflops, die beim Überschreiten der positiven und der negativen Schwellenspannung schalten, gleich der halben Leseimpulsdauer, und die Dauer der Impulse des Monoflops, das bei eienm Nulldurchgang schaltet, gleich einem Viertel der Leseimpulsdauer eingestellt.

Die Erfindung wird nachstehend anhand von Ausführungsbeispielen unter Bezugnahme auf die Zeichnung näher beschrieben, in der zeigen:

Fig. 1 das Aufzeichnungsprinzip, von dem die Erfindung ausgeht,

Fig. 2 schematisiert den Verlauf des Aufzeichnungsvorgangs nach diesem Prinzip,

Fig. 3 ein erstes Ausführungsbeispiel der erfindungsgemäßen Einrichtung zur Aufzeichnung binärer Daten,

Fig. 4 ein Impuls/Zeit-Diagramm des in Fig. 3 dargestellten Ausführungsbeispiels,

Fig. 5 ein zweites Ausführungsbeispiel der erfindungsgemäßen Einrichtung zur Aufzeichnung binärer Daten,

Fig. 6 ein Impuls/Zeit-Diagramm des in Fig. 5 dargestellten Ausführungsbeispiels,

Fig. 7 ein erstes Ausführungsbeispiel der erfindungsgemäßen Einrichtung zur Rückgewinnung von auf einem
magnetischen Informationsträger aufgezeichneten
binären Signalen, und

Fig. 8 ein Impuls/Zeit-Diagramm des in Fig. 7 dargestellten Ausführungsbeispiels.

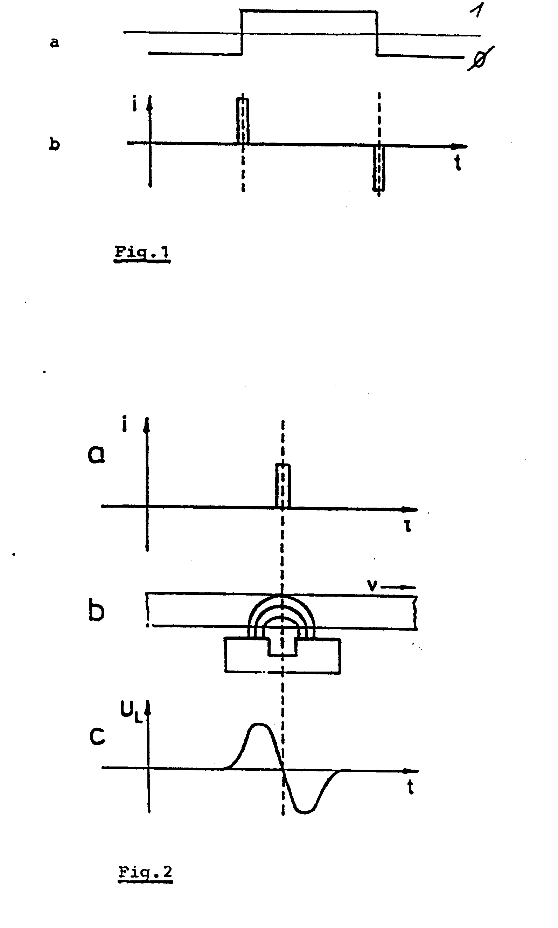

Fig. 1 erläutert das Aufzeichnungsprinzip, von dem die Erfindung ausgeht. Gemäß diesem Aufzeichnungsprinzip erzeugt
jede ansteigende Datenflanke beispielsweise einen positiven und jede fallende Datenflanke beispielsweise einen negativen Schreibimpuls. Dies bedeutet, daß, wenn beispielsweise zwei positive Datensignale aufeinanderfolgen, keine Aufzeichnung erfolgt. Damit ist es zur vollständigen Rückgewinnung der aufgezeichneten Daten erforderlich eine Zeitbasis bzw. Taktimpulse zu verwenden, um die Zahl der direkt
aufeinanderfolgenden Signale "1" bzw. "∅" feststellen zu
können.

Fig. 1a zeigt ein Beispiel für ein Datensignal und Fig. 1b
den zugehörigen Verlauf der durch einen Magnetkopf fließenden Schreibströme.

Die Impulsdauer der (Strom-) Schreibimpulse ist so kurz gewählt, daß die Relativgeschwindigkeit zwischen Magnetkopf
und Informationsträger keinen merklichen Einfluß auf die Form der aufgebrachten Magnetisierung hat. Unter diesen Voraussetzungen ist auch die Form des Schreibimpulses ohne merklichen Einfluß auf die resultierende Magnetisierung.

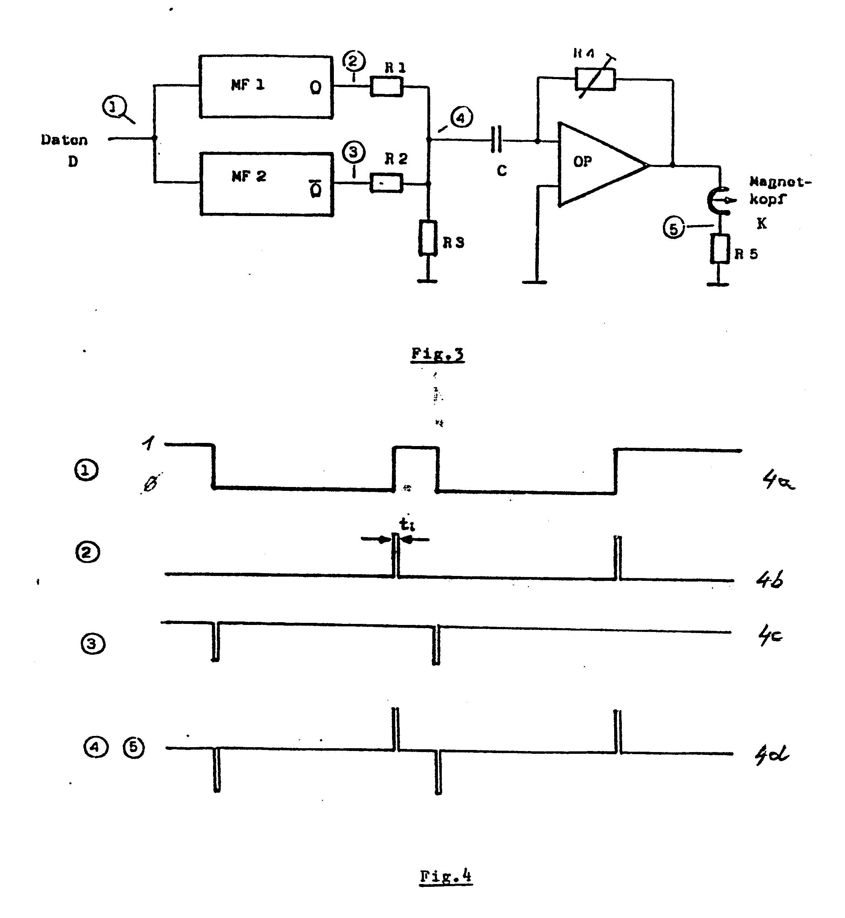

Fig. 2 zeigt dies schematisch. Da während der Schreibimpulsdauer (Fig. 2a) voraussetzungsgemäß fast keine Ortsverschiebung des sich mit der Geschwindigkeit v bewegenden Informationsträgers, beispielsweise eines Magnetbandes oder einer Magnetplatte auftritt, entsteht auf dem Informationsträger ein Abdruck des Kopffeldes eines Magnetkopfs K als bleibende Magnetisierung (Fig. 2b). Als Lesespannung entsteht ein symmetrisches Signal mit einem Nulldurchgang an der Stelle des Schreibimpulses (Fig. 2c). Dieser Nulldurchgang kann bei der Signal-Rückgewinnung direkt, d.h. ohne zusätzliches Differenzieren ausgewertet werden.

Fig. 3 zeigt ein erstes Ausführungsbeispiel einer erfindungsgemäßen Einrichtung zur Aufzeichnung binärer Daten. Die Einrichtung weist zwei Monoflops MF1 und MF2 auf, deren Ausgangsanschlüsse über Widerstände R1 und R2 sowohl mit dem einen Anschluß eines Kondensators C als auch mit dem einen Anschluß eines als Summationswiderstands dienenden Widerstands R3 verbunden sind. Der andere Anschluß des Kondensators C ist mit dem invertierenden Eingangsanschluß eines Operationsverstärkers OP verbunden, in dessen Rückführung ein variabler Widerstand R4 liegt, und dessen Ausgangsanschluß mit dem Magnetkopf K verbunden ist.

Die Funktionsweise der dargestellten Schaltung soll im folgenden unter Bezugnahme auf Fig. 4 erläutert werden.

Die Datenimpulse D (Fig. 4a) werden an die Eingangsanschlüsse der beiden Monoflops MF1 und MF2 angelegt. Das Monoflop MF1 liefert einen Impuls kurzer Impulsdauer bei jeder positiven Flanke der Datenimpulse (Fig. 4b), während das Mono-

flop MF2 einen Impuls bei jeder negativen Flanke der Datenimpulse D liefert (Fig. 4c). Die Impulsdauer $t_i$, die für die beiden Monoflops gleich eingestellt ist, hängt von den Eigenschaften des magnetischen Trägermaterials und des Magnetkopfs K ab und muß vor der Einstellung der Monoflops empirisch ermittelt werden.

Die Spannungs-Ausgangssignale der beiden Monoflops werden von dem Summationswiderstand R3 summiert, so daß am Eingangsanschluß des aus dem Kondensator C, dem Operationsverstärker OP und dem Widerstand R4 bestehenden Differenzierers ein Spannungssignal entsprechend Fig. 4d ansteht.

Da der zeitliche Verlauf des Stroms im Magnetkopf K proportional dem Integral der Spannung an seinen Anschlüssen ist, und am Magnetkopf K das differenzierte Signal gemäß Fig. 4d ansteht, fließen durch den Magnetkopf K Stromimpulse, deren Form ebenfalls der Form der in Fig. 4d gezeigten Impulse entspricht. Die Verwendung eines Differenzierers als "Koppelstufe" zum Ankoppeln des Spannungssignals an den Magnetkopf K hat den Vorteil, daß erstens der Mittelwert des Signals Null ist, und daß zweitens das differenzierte Signal niederohmig dem Magnetkopf K zugeführt wird. Durch die niederohmige "Spannungsaussteuerung" des Magnetkopfs spielen die Eigenschaften der Zuleitung eine untergeordnete Rolle, so daß kurze Stromimpulse im Magnetkopf erreicht werden können.

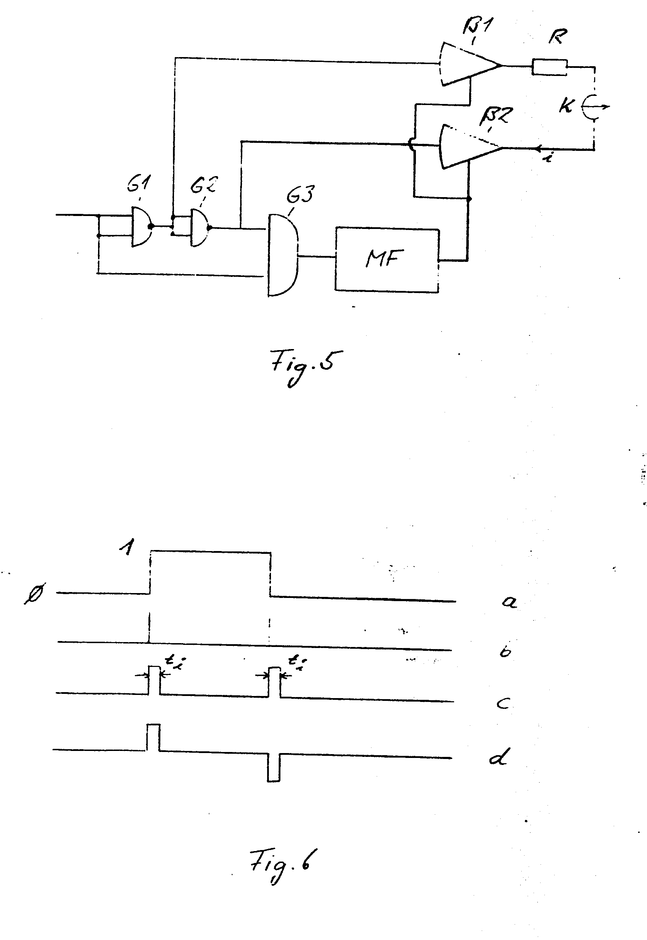

Fig. 5 zeigt ein zweites Ausführungsbeispiel der Einrichtung zur Aufzeichnung binärer Signale auf einem magnetischen Informationsträger. Die aufzuzeichnenden Daten werden an die beiden Eingangsanschlüsse eines UND-Glieds G1 mit negiertem Ausgang sowie an den einen Eingangsanschluß eines UND-Glieds G3 angelegt. Der Ausgangsanschluß des UND-Glieds G1 ist mit dem Eingangsanschluß eines ersten Tristate-Buffers B1 sowie mit den beiden Eingangsanschlüssen eines UND-Glieds G2 mit negiertem Ausgang verbunden. Der Ausgangsanschluß des UND-Glieds G2 ist mit dem anderen Eingangsanschluß des UND-Glieds G3 sowie mit dem Eingangsanschluß eines zweiten Tristate-Buffers B2 verbunden. Der Ausgangsanschluß des UND-Glieds G3 ist mit einem Monoflop MF verbunden, dessen Q-Ausgangsanschluß mit den Triggereingängen der Tristate-Buffer B1 und B2 verbunden ist. Der Ausgangsanschluß des Tristate-Buffers B1 ist über einen Widerstand R mit dem einen Anschluß eines Magnetkopfs K verbunden, dessen anderer Anschluß mit dem Ausgangsanschluß des Tristate-Buffers B2 verbunden ist.

Die Funktionsweise der in Fig. 5 dargestellten Schaltung soll im folgenden unter Bezugnahme auf Fig. 6 erläutert werden. Am Eingangsanschluß des Tristate-Buffers B1 liegt das invertierte Datensignal und am Eingangsanschluß des Tristate-Buffers B2 das nichtinvertierte Datensignal an (Fig. 6a). Am Eingangsanschluß des Monoflops MF liegen aufgrund der Zeiteigenschaften der UND-Glieder G1 bis G3 die in Fig. 6b dargestellten Impulsspitzen an, aufgrund derer das Monoflop MF die in Fig. 6c gezeigten Impulse der Dauer $t_i$ abgibt. Die Ausgangsanschlüsse der Tristate-Buffer B1 und B2 liegen während der Dauer der Ausgangsimpulse des Monoflops MF auf dem Potential "high" bzw. "low" der Logikschaltung (bei CMOS-Schaltkreisen entspricht "low" dem Massepotential und "high" der positiven Betriebsspannung von vorzugsweise 15 V) entsprechend dem an ihrem Eingang anstehenden Signal. Damit liegen entsprechend der fallenden oder steigenden Datenflanke an dem einen oder dem anderen Anschluß der Magnetkopfs K Spannungsimpulse an. Da die Impulse aus der selben Betriebsspannung $U_v$ abgeleitet sind, sind sie der Forderung entsprechend exakt gleichgroß. Der für die Aufzeichnung entscheidende Magnetisierungsstrom I wird durch den Widerstand R erzeugt. Sein Wert bestimmt die Stärke der Magnetisierung, die Amplitude der umgeschalteten Spannung $U_V$ hat vorwiegend Einfluß auf die Stromanstiegsgeschwindigkeit im Magnetkopf.

Da ferner ein einziges Monoflop MF die Dauer aller Impulse bestimmt, sind die Impulsdauern immer gleich groß.

Am Ende eines Impulses der Dauer $t_i$ werden die Tristate-Buffer B1 und B2 vom Monoflop MF in einer hochomigen Zustand geschaltet, der Magnetisierungsstrom wird damit zu $\emptyset$.

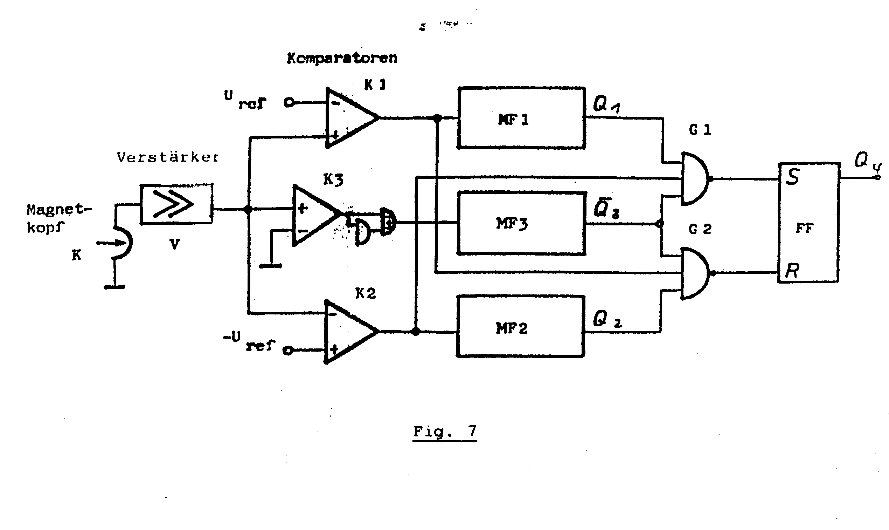

Fig. 7 zeigt ein Ausführungsbeispiels einer erfindungsgemäßen Einrichtung zur Rückgewinnung von auf einem magnetischen Informationsträger aufgezeichneten binären Informationen. Das von einem Magnetkopf K erhaltene und zu $\emptyset$ symetrische Lesesignal L wird von einem Verstärker V verstärkt, dessen Ausgangsanschluß mit den Eingangsanschlüssen von drei Komperatoren K1, K2, K3 verbunden ist. Der Ausgangsanschluß des Komperators K1 ist mit dem Eingangsanschluß eines Monoflops MF1 sowie dem einen Eingangsanschluß einen UND-Glied G2 mit drei Eingangsanschlüssen und negiertem Ausgang verbunden.

Der Ausgangsanschluß der Komperators K2 ist mit dem Eingangsanschluß eines Monoflops MF2 sowie dem einen Eingangsanschluß einen UND-Glieds G1 mit drei Eingangsanschlüssen und negiertem Ausgangsanschluß verbunden.

Der Ausgangsanschluß des Komperators K3 ist über das dargestellte Gatter-Netzwerk aus mit dem Eingangsanschluß eines Monoflops MF3 verbunden.

Der Q-Ausgangsanschluß des Monoflops MF1 ist mit dem UND-Glied G1, der Q-Ausgangsanschluß der Monoflops MF2 ist mit dem UND-Glied G2 und der Q-Ausgangsanschluß der Monoflops MF3 mit beiden UND-Gliedern verbunden.

Die Ausgangsanschlüsse der UND-Glieder G1 und G2 sind mit den S bzw. R-Eingangsanschluß eines Flip-Flops FF verbunden.

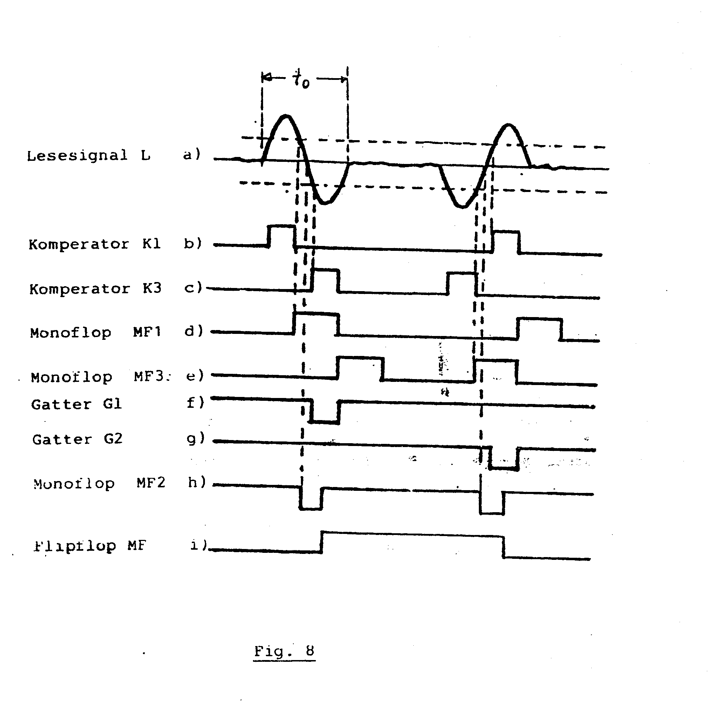

Die Funktionsweise der in Fig. 7 dargestellten Schaltung wird im folgenden unter Bezugnahme auf Fig. 8 erläutert.

Bei gültigen Leseimpulsen (Fig. 8a) werden die drei Referenzpegel in abwechselnder Reihenfolge, aber immer innerhalb einer bestimmten Zeit durchlaufen. Diese Zeit hängt von der Leseimpulsbreite und damit von den Aufnahmeparametern und kann als bekannt vorausgesetzt werden.

Wir z. B. der Pegel +Urev in Richtung der Nullinie überschritten, so muß innerhalb einer, mit dem Monoflop MF1 einstellbaren Zeit der Pegel -Urev erreicht werden. Ist diese Bedingung erfüllt, wird mit dem Gatter G1 ein Zeitfenster geöffnet (Fig. 2f). Der zwischen den Referenzpegeln liegende Nulldurchgang setzt über das Monoflop MF3 verzögert das Flip-Flop FF auf Logisch "high" (Fig. 2h und Fig. 2i).

Bei einem Lesesignal mit positiver Steigung werden die Komperatorpegel in umgekehrter Reihenfolge durchschritten. Mit dem Monoflop MF2 und über das Gatter G2 wird wieder ein Zeitfenster geöffnet (Fig. 8g). Der Nulldurchgang sorgt jetzt für ein Rücksetzen des Flip-Flops FF auf "low".

In jedem Falle stehen am Ausgang des Flips F die zurückgewonnen Daten an (Fig. 2i).

KANZLEI

# MÜNICH & SCHILLER

0131823

DIPL.-PHYSIKER
DR. WILHELM MÜNICH PATENTANWALT
DR. WALTER SCHILLER RECHTSANWALT

WILLIBALDSTR. 86 · D 8000 MÜNCHEN 21          TEL.: 089/5808049 · TELEX: 528464 W MUEN D

UNSER ZEICHEN:

F 11/84 EUP

Dr.-Ing. Norbert Bauer

Volckamerstr. 14

8520 Erlangen

Einrichtung zur Aufzeichnung und Rückgewinnung binärer Signale auf einem magnetischen Informationsträger

P a t e n t a n s p r ü c h e

1. Einrichtung zur Aufzeichnung binärer Signale auf einem
magnetischen Informationsträger, bei der an einen Aufzeichnungs-Magnetkopf bei jeder Änderung der aufzuzeichnenden
Signale von "$\emptyset$" auf "1" ein Nadelimpuls der einen Polarität
und bei jeder Änderung von "1" auf "$\emptyset$" ein Nadelimpuls der
anderen Polarität angelegt wird,
dadurch **gekennzeichnet,** daß zwei Monoflops (MF1,MF2) vorgesehen sind, an deren Triggereingangsanschlüsse die aufzuzeichnenden Signale angelegt sind, und von denen das eine
(MF1) bei jeder ansteigenden Flanke der aufzuzeichnenden
Signale einen Impuls der einen Polarität und der Dauer $t_i$

BANKVERBINDUNG: KREISSPARKASSE MÜNCHEN (BLZ 702 501 50) 80 6174

STADTSPARKASSE MÜNCHEN (BLZ 701 500 00) 84-125514 · POSTSCHECKAMT MÜNCHEN 150505-802

und das andere (MF2) bei jeder abfallenden Flanke einen Impuls der anderen Polarität und der Dauer $t_i$ abgibt, und daß eine Summationsschaltung (R3) die Ausgangsimpulse der Monoflops summiert, und Strom-Impulse der Dauer $t_i$ an den Magnetkopf (K) anlegt.

2. Einrichtung nach Anspruch 1,
dadurch **gekennzeichnet** , daß zur Spannungs/Strom-Umsetzung eine Differenzierschaltung (C, R4, OP) das Ausgangssignal der Summationsschaltung differenziert und das differenzierte Signal an den Magnetkopf (K) anlegt.

3. Einrichtung nach Anspruch 2,
dadurch **gekennzeichnet,** daß die Differenzierschaltung einen Operationsverstärker (OP) aufweist, mit dessen invertierendem Eingangsanschluß der eine Anschluß eines Kondensators (C) verbunden ist, dessen anderer Anschluß mit dem Ausgangsanschluß der Summationsschaltung (R3) verbunden ist.

4. Einrichtung zur Aufzeichnung binärer Signale auf einem magnetischen Informationsträger, bei der an einen Aufzeichnungs-Magnetkopf bei jeder Änderung der aufzuzeichnenden Signale von "Ø" auf "1" ein Nadelimpuls positiver Polarität und bei jeder Änderung von "1" auf "Ø" ein Nadelimpuls negativer Polarität angelegt wird,
dadurch **gekennzeichnet,** daß ein Monoflop (MF) vorgesehen ist, an dessen Triggereingangsanschluß das aufzuzeichnende Signal angelegt ist, und das bei einer Änderung der aufzuzeichnenden Signale von "Ø" auf "1" bzw. umgekehrt einen Stromimpuls der Dauer $t_i$ erzeugt, und daß eine Logikschaltung die Richtung, in der der Stromimpuls durch den Magnetkopf (K) fließt umkehrt, wenn sich das aufzuzeichnende Signal von "Ø" auf "1" bzw. von "1" auf "Ø" ändert.

5. Einrichtung nach Anspruch 4, dadurch **gekennzeichnet** , daß die Logikschaltung ein erstes UND-Glied (G1) mit negiertem Ausgangsanschluß, an dessen beide Eingangsanschlüsse die aufzuzeichnenden Signale angelegt sind, ein zweites UND-Glied (G2) mit negiertem Ausgangsanschluß, dessen beide Eingangsanschlüsse mit dem Ausgangsanschluß des ersten UND-Glieds (G1) verbunden sind, und ein drittes UND-Glied (G3), dessen einer Eingangsanschluß mit dem Ausgangsanschluß des zweiten UND-Glieds (G3) verbunden ist und an dessen zweitem Eingangsanschluß die aufzuzeichnenden Signale angelegt sind, sowie zwei Tristate-Buffer (B1, B2) aufweist, deren Eingangsanschlüsse mit dem Ausgangsanschluß des ersten (G1) bzw. zweiten UND-Glieds (G2) und deren Trigger-Anschlüsse mit dem Ausgangsanschluß des Monoflops (MF) verbunden sind, und daß der eine Anschluß des Magnetkopfs (K) über einen Widerstand (R) mit dem Ausgangsanschluß eines Tristate-Buffers (B1) und der andere Anschluß mit dem Ausgangsanschluß des anderen Tristate-Buffers (B2) verbunden ist.

6. Einrichtung zur Rückgewinnung von auf einem magnetischen Informationsträger aufgezeichneten, durch die Magnetisierungsrichtung festgelegten binären Signalen aufgrund der Ermittlung des Nulldurchgangs der Magnetisierung zwischen aufeinanderfolgenden Spurelementen des Informationsträgers, **gekennzeichnet** durch drei Komparatoren (K1, K2, K3), die die Lesespannung (L) mit einer positiven Schwellenspannung ($+U_{ref}$) und einer gleich großen negativen Schwellenspannung ($-U_{ref}$) sowie mit einer zwischen diesen beiden Spannungen liegenden Spannung (O) vergleichen, durch drei Monoflops (MF1, MF2, MF3), von denen das eine Monoflop (MF1) bei dem mittels des einen Komparators (K1) festgestellten Überschreiten der positiven Schwellenspannung ($+U_{ref}$) von der positiven Seite des Lesesignals (L) her und das andere Monoflop (MF2) bei dem mittels des anderen Komparators (K2) festgestellten Überschreiten der negativen Schwellenspannung ($-U_{ref}$) von der negativen Seite des Lesesignals her jeweils einen Impuls bestimmter Länge und das weitere Monoflop (MF3) zum Zeitpunkt des durch den weiteren Komparator (K3) festgestellten Nulldurchgangs des Lesesignals (L) einen Impuls bestimmter Länge erzeugt, sowie durch ein Flipflop (FF), welches durch die Ausgänge von dem einen (MF1) und dem weiteren Monoflop (MF3) sowie von dem anderen Komparator (K2) gesetzt und durch die Ausgänge von dem anderen (MF2) und dem weiteren Monoflop (MF3) sowie von dem einen Komparator (K1) zurückgesetzt wird und dessen Ausgang das zurückgewonnene Datensignal repräsentiert.

7. Einrichtung nach Anspruch 6, **gekennzeichnet** durch eine Schaltung zur Speicherung des Spitzenwertes der maximalen Lesespannung in positiver und in negativer Richtung sowie durch Einstellung der positiven Schwellenspannung auf 20% des positiven sowie der negativen Schwellenspannung auf 20% des negativen Spitzenwertes der Lesespannung.

8. Einrichtung nach Anspruch 6 oder 7, dadurch **gekennzeichnet** , daß die Dauer der Impulse von dem einen und von dem anderen Monoflop (MF1 bzw. MF2) gleich der halben Leseimpulsdauer und die Dauer der Impulse von dem weiteren Monoflop (MF3) gleich einem Viertel der Leseimpulsdauer bemessen ist.

Fig.1

Fig.2

**Fig.3**

**Fig.4**

Fig.5

Fig.6

Fig. 7

5/5  0131823

Fig. 8